# EUROPEAN PATENT APPLICATION

(11) **EP 2 400 710 A1**
(43) Date of publication of application: **28.12.2011**
(21) Application number: 10305670.1
(22) Date of filing: 23.06.2010
(51) Int. Cl.: H04L 29/06, H04N 7/173, H04L 29/08

(54) **Mechanism for filtering content in IPTV**

(71) Applicant: Alcatel Lucent, 75007 Paris (FR)
(72) Inventor: Karthick, Rajapandiyan, 600044, Tamil Nadu (IN); Naryanan, Vijay, 600018, Chennai (IN)
(74) Representative: Sciaux, Edmond

(57) **Abstract**

Mechanism for filtering content in IPTV is disclosed. The present invention relates to Internet Protocol Television services and, more particularly, to Value added services in Internet protocol Television. Existing IP TV services do not provide any means to block super-imposed content from a channel. A user may request for registration for the service to block super-imposed content from the channel with the network operator. The network operator may then register user for the service. When user wishes to remove super-imposed content being displayed on the channel, he may place a request to network operator to remove super-imposed content. The network operator may configure DSLAM or BSR regarding the request of the user. The DSLAM or BSR then sends a request to content provider module in order to remove the super-imposed content for that particular channel for the user. The channel is then streamed without the super-imposed content to user.

## Description

### TECHNICAL FIELD

The present invention relates to Internet Protocol Television services and, more particularly, to Value added services in Internet protocol Television.

### BACKGROUND

With the rapid growth in the network speeds and development of Internet based service, Internet Protocol (IP) Television (TV) has emerged as a preferred means for digital broadcast service. IP TV provides different Value Added Services (VAS) to users, such as live recording of channels, on demand services, electronic program guide and so on. IP TV also provides a means by which the user may be provided super-imposed content such as sub-titles, texts, advertisements, images and the like as a part of his channel content to his television or computer screens.

Existing IP TV platforms do not have the feature to block the display of superimposed content that appear on the screen of the user, when the user is viewing some channel content. There is a possibility that a user may want to block such unwanted super-imposed content from being displayed while he is viewing the channel content. In an example, where a user is viewing a movie channel and there is a display of super-imposed content such as ad content running at the bottom of the screen repeatedly or otherwise, the ad content being displayed may be disturbing to the user and he may want to remove the ad content for a more pleasurable or useful experience. In another example, the super-imposed content being displayed on the channel may not be suitable for a kid to read. Therefore, there are many such instances where users may not want super-imposed content display. Present day IP TV platforms or digital services platform offer the options to block out the channel as a whole, but there is no means to remove only the super-imposed content being displayed on a channel. Hence, the user is left with no option but to block the channel as a whole.

### SUMMARY

In view of the foregoing, an embodiment herein provides a network module in an Internet Protocol television environment for blocking super-imposed content in a channel. The module configured with at least one means adapted for receiving a request for removing the super-imposed content from the channel from a user, routing the request to a content provider module for removal of the super-imposed content for the channel, receiving the channel content without the super-imposed content from the content provider module and sending the channel content without the super-imposed content to a device of the user. The network module is configured with means further adapted for registering the user for the service and storing information of the user with a network operator. The network module is configured with means further adapted for checking if the user is registered for the service before routing the request to the content provider module. The network module is configured with means adapted for blocking the super-imposed content, where the super-imposed content is at least one of sub-titles, images, messages, text, advertisements or combination of the same.

Embodiments further disclose a content provider module in an internet protocol television environment, for blocking super-imposed content in a channel. The provider is configured with at least one means adapted for receiving a request from a network module for blocking the super-imposed content from the channel content, decoding the request to identify the channel from which the super-imposed content is to be blocked and removing the superimposed content from the channel content by not overlaying the channel content with the super-imposed content and routing the channel content without the super-imposed content to the network module. The content provider module is configured with means adapted for receiving the request from the network module wherein the network module is a digital subscriber line access module. The content provider module is configured with means adapted for receiving the request from the network module wherein the network module is a broadband service router. The content provider module is configured with means adapted for removing the super-imposed content from the channel, wherein the super-imposed content is at least one of sub-titles, images, messages, text, advertisements or a combination of the same. The content provider module is configured with means adapted for decoding the request by using a decoder that is configured for identifying the channel from which the super-imposed content is to be removed.

Also, disclosed herein is a method for blocking super-imposed content in a channel in an internet protocol television environment. The environment comprising a network module, a routing gateway, a switch, plurality of users, a content provider module further the method comprising receiving by the network module a request for removing the super-imposed content for the channel from the user, routing by the network module the request to a content provider module for removal of the super-imposed content for the channel, identifying by the content provider module the channel from which the super-imposed content is to be removed, removing by the content provider module the content from the channel by not overlaying the super-imposed content on the channel content, sending by the content provider module the channel content to the network module without the super-imposed content and sending by the network module the channel content without the super-imposed content to a device of the user. The method further registers the user for the service and stores the user's information with a network operator. The method is further provided with means to check if the user is registered for the service before routing the request to the content provider module. The method is provided with means to block the super-imposed content, where the content is at least one of sub-titles, images, messages, text, advertisements or combination of the same. The network module is a digital subscriber line access module. The network module is a broadband service router.

These and other aspects of the embodiments herein will be better appreciated and understood when considered in conjunction with the following description and the accompanying drawings.

### BRIEF DESCRIPTION OF THE FIGURES

The embodiments herein will be better understood from the following detailed description with reference to the drawings, in which:

FIG. 1 illustrates the architecture of the IP TV network, according to an embodiment as disclosed herein;

FIG. 2 depicts a Broadband Service Router (BSR), according to an embodiment as disclosed herein;

FIG. 3 depicts a Digital Subscriber Line Access Multiplexer (DSLAM), according to an embodiment as disclosed herein;

FIG. 4 depicts a content provider module, according to an embodiment as disclosed herein;

FIG. 5 is a flow chart depicting the process of registration, according to an embodiment as disclosed herein; and

FIG. 6 is a flow chart depicting the process of blocking super-imposed content in IP TV service, according to an embodiment as disclosed herein.

### DETAILED DESCRIPTION OF EMBODIMENTS

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

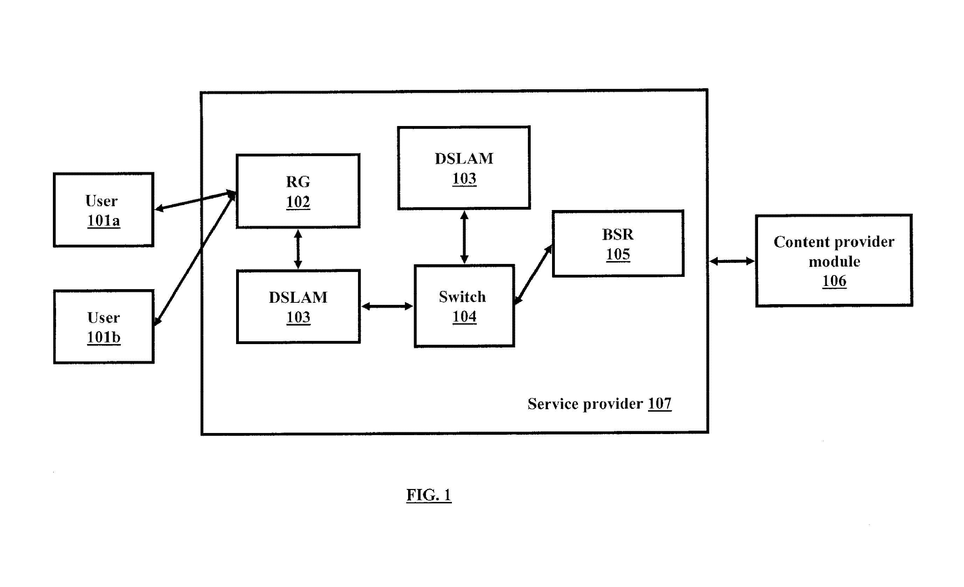

The embodiments herein disclose a mechanism for blocking super-imposed content from a channel by providing systems and method therefore. Referring now to the drawings, and more particularly to FIGS. 1 through 6, where similar reference characters denote corresponding features consistently throughout the figures, there are shown embodiments.

A system and method for blocking super-imposed content from a particular channel is disclosed. The system facilitates a user who is using IP TV service to block super-imposed content from a particular channel selected by him. The super-imposed content may be sub-titles, images, messages, text, advertisements or a combination of the same that are displayed in the channel or the like. A user who is not interested in viewing the super-imposed content in a channel may request for a registration for the service to block the super-imposed content from the channel selected by him with the network operator. The network operator may then register the user for the service. A record may be made by the network operator regarding the registration of the service with a network module, where the network module may be a Digital Subscriber Line Access Module (DSLAM) or a Border Service Router (BSR). Later, when the user switches on his television or computer to watch a channel and wishes to remove the super-imposed content being displayed on the channel, he may send a request to the network operator to remove the super-imposed content. The network operator may authenticate the details of the user and may intimate the network module regarding the request of the user. The network module then sends a request to the content provider module in order to remove the super-imposed content for that particular channel for the user. The content provider module decodes the request and identifies the channel chosen by the user and further, removes the super-imposed content from that channel. The content provider module then streams the channel content without the super-imposed content to the network module. The network module routes the streamed channel without the super-imposed content to the user.

FIG. 1 illustrates the architecture of the IP TV network, according to an embodiment as disclosed herein. The system comprises plurality of users 101a, 101b, a routing gateway 102, a plurality of Digital Subscriber Line Access Module (DSLAMs) 103, a switch 104, Border Service Router (BSR) 105 and a content provider module 106. In an embodiment, the system may further comprise of other network elements in addition to the components mentioned above.

The user 101a, 101b may be a viewer who is using IP TV service. The user 101a, 101b may be registered for the service to block super-imposed content from the channel desired by him. At the user 101a, 101b end, the channel may be viewed on a television or a computer that employs IP TV service. In an embodiment, the user 101a, 101b may employ a Set Top Box (STB) for accessing channel on his television or computer.

The routing gateway 102 is a residential gateway that resides in the vicinity of the user's television or computer. The routing gateway 102 may be a modem like device that routes messages, super-imposed content or channel content to and from the user's television to the DSLAM 103 or some other network module. The routing gateway 102 is configured for decoding the control signals from the network modules and performing required actions. The routing gateway 102 decodes the channel content received from the content provider module 106 through the network elements and sends the channel content to appropriate user 101 who requested for the channel.

The DSLAM 103 is a network module that acts as an intermediate for routing the requests from the user 101 to the content provider module 106. A plurality of routing gateways 102 may be connected to the DSLAM 103. When the DSLAM 103 receives a request for removal of super-imposed content from a particular channel from a user 101, the DSLAM 103 may store the service information of the user 101 for the chosen channel. Further, the DSLAM 103 is configured to identify users 101 for the service by checking for the service subscription information stored on it. The DSLAM 103 may also inform the BSR 105 of the user's request to remove the super-imposed content from a channel.

The switch 104 acts as an intermediate network component for routing the requests or streaming channel between the DSLAM 103 and the content provider module 106. A plurality of DSLAMs 103 may be connected to the switch 104.

The Border Service Router (BSR) 105 is responsible for receiving requests and responses from network components such as a switch 104, DSLAM 103 or the like. The BSR 105 may route the requests to the appropriate content provider module 106. In an embodiment, the BSR 105 may also take up the function of routing the request directly from the user 101 to the content provider module 106 without the DSLAM 103. Further, the BSR 105 may also be configured to store details of users 101 who register for the service and identify the users 101 for whom the service is to be offered by checking the profile details of the users 101.

The content provider module 106 provides content to the user, via the service provider 107. The content provider module 106 removes super-imposed content requested by the user 101 for removal from the channel. In an example, the content provider may be Dish TV provider, Tata Sky and so on that provides different channels such as ESPN, Star Sports, UTV, Sun TV, HBO and the like. On receiving a request from the user 101 the content provider module 106 decodes the request and identifies the channel from which the super-imposed content (subtitles, images, messages and so on) may be removed. Further, the super-imposed content is removed from the channel before streaming the channel for the user 101. Under normal circumstances, in order to insert sub-titles for a channel, the content provider module 106 superimposes the sub-titles on the channel content before streaming the channel content to the user 101. On receiving a request from the user 101 for removal of the sub-titles, the content provider module 106 does not perform superimposition and hence the channel content is streamed to the user without the sub-titles.

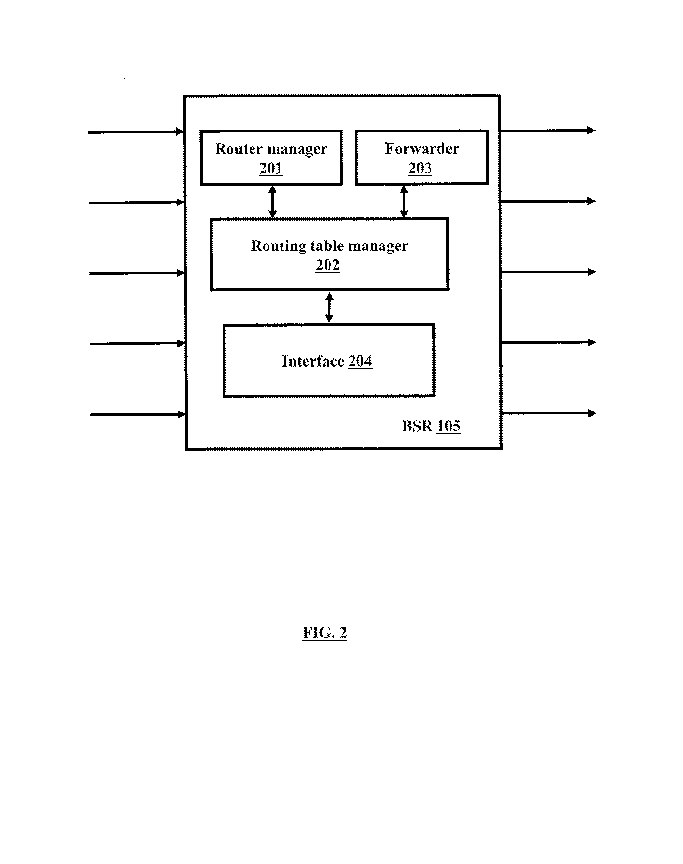

FIG. 2 depicts a Border Service Router (BSR), according to an embodiment as disclosed herein. The BSR 105 comprises a router manager 201, routing table manager 202, forwarder 203 and an interface 204. The BSR 105 is responsible for maintaining details on the profile of the user 101 who is subscribed for the service to block super-imposed content from a desired channel. When a user 101 sends a request for blocking particular super-imposed content from any channel, the request is routed to the BSR 105 by the DSLAM 103. In an embodiment, the request may be sent in the form of an Internet Group Management Protocol (IGMP) request using IGMP forking method. Further, the DSLAM 103 may also inform the BSR 105 to remove the super-imposed content from the channel selected by the user 101a, 101b. Further, the BSR 105 may inform the content provider module 106 to remove the super-imposed content from the channel chosen by the user 101a, 101b.

The router manager 201 is responsible for accepting requests received from the network modules such as DSLAM 103, switch 104 and so on. The router manager 201 decodes the request and routes the request to appropriate module that serves the request. The router manager 201 handles the functioning of the routing table by issuing the appropriate control signals. When multiple requests are received from the users 101, the router manager 201 refers to the routing table to identify the user with the request and sends the request to the content provider module 106 to address the request.

The routing table manager 202 is responsible for maintaining a table of records for the requests. The routing table manager 202 is controlled by the router manager 201. When a request is received by the BSR 105, the request is routed to the routing table manager 202 in order to maintain a record of the request. Further, by referring to the table the appropriate content provider module 106 is identified for the request and the request may be routed to the same content provider module 106. In an embodiment, it is possible that multiple requests may be routed to a same content provider module 106. In an embodiment, the routing table may contain details such as active group table, with port id, vlan id, mcast group, string address state and the like.

The forwarder 203 is configured for routing request to appropriate destinations. The forwarder 203 directs the requests or responses so that the request/ responses may be routed to appropriate destinations.

The interface 204 acts as a means for interaction of the BSR 105 with external network components such as DSLAM 103, switch 104, content provider module 106, other BSR 105 and the like. All requests and responses are routed through the interface 204 to various other components. The requests may be requests for removal of the super-imposed content from the selected channel or the like.

In an embodiment, the functions of the DSLAM 103 may also be performed by the BSR 105. The BSR 105 may take up the role of registering a user 101 and storing details of the user. The BSR 105 may also receive any requests from the user 101 and perform a check if the user 101 is registered for the service, and if the user is registered for the service, the BSR 105 may send the request to the content provider module 106 for removal of the super-imposed content.

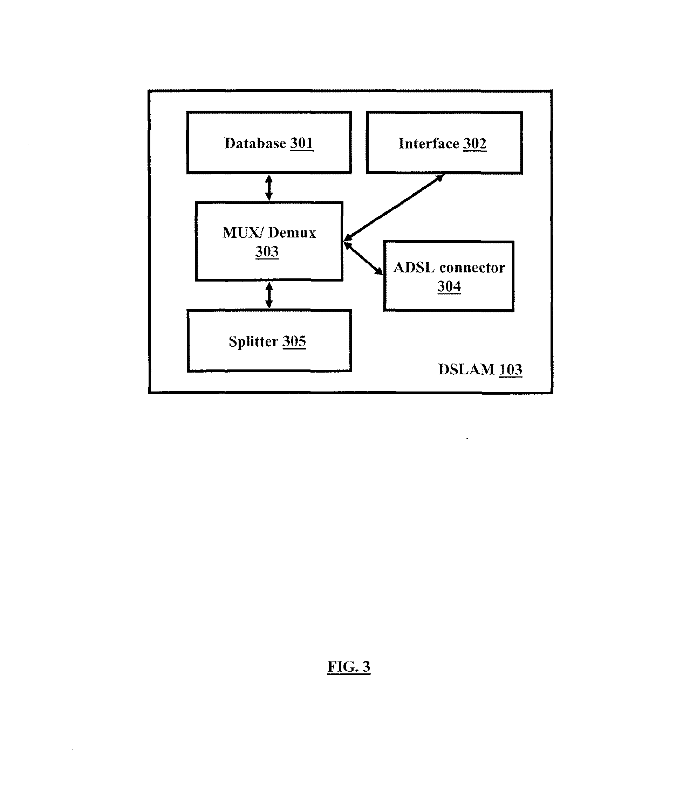

FIG. 3 depicts a Digital Subscriber Line Access Multiplexer (DSLAM), according to an embodiment as disclosed herein. In an embodiment, the functions of the DSLAM 103 may be performed by the BSR 105. The DSLAM 103 comprises of a database 301, an interface 302, Mux/ Demux 303, ADSL connector 304 and a splitter 305. The DSLAM 103 is responsible for storing registration details of the user 101. The DSLAM 103 is also responsible for receiving request from the user 101 and routing the request to the content provider module 106 via the BSR 105.

The database 301 is configured for maintaining the details of the user 101. When a user 101 registers for the service to remove the super-imposed content from a channel the details of the user 101 may be stored on the database 301. The database 301 may store the details of the user 101 that include user port ID and the channel for which the user 101 has requested for the service. In an example, say the user 101 may wish to block the service for HBO then the database may store details of the user 101 in the manner as user port ID: 1/1/4/20 and channel ID or multicast group address: 230.1.1.1. In addition, the database 301 may also store other information about the user 101 such as different services for which the user 101 is subscribed to, if user 101 is a post paid or pre-paid subscriber and so on.

The interface 302 acts as a means for the interaction between the DSLAM 103 with other modules of the network. It is through the interface 302 that the DSLAM receives and sends requests and responses to other network modules.

The Mux/Demux 303 are configured for multiplexing and demultiplexing the request or responses handled by the DSLAM 103. Since, the DSLAM 103 may receive requests from multiple users for the service, the requests need to be routed appropriately, Mux/Demux 303 ensures that the received requests are routed to the appropriate destinations. The Mux/Demux 303 may also assign priority to users to be served and may service the users based on the assigned priority.

The ADSL connector 304 enables ADSL connection to the DSLAM 103. The splitter 305 is responsible for providing access to the same line at the same time without any interference or attenuation. The splitter 305 ensures that a single line may be employed for ADSL service and calls (voice calls) at the same time and eliminates any attenuation. In an embodiment, a micro filter may also be employed in place of the splitter 305.

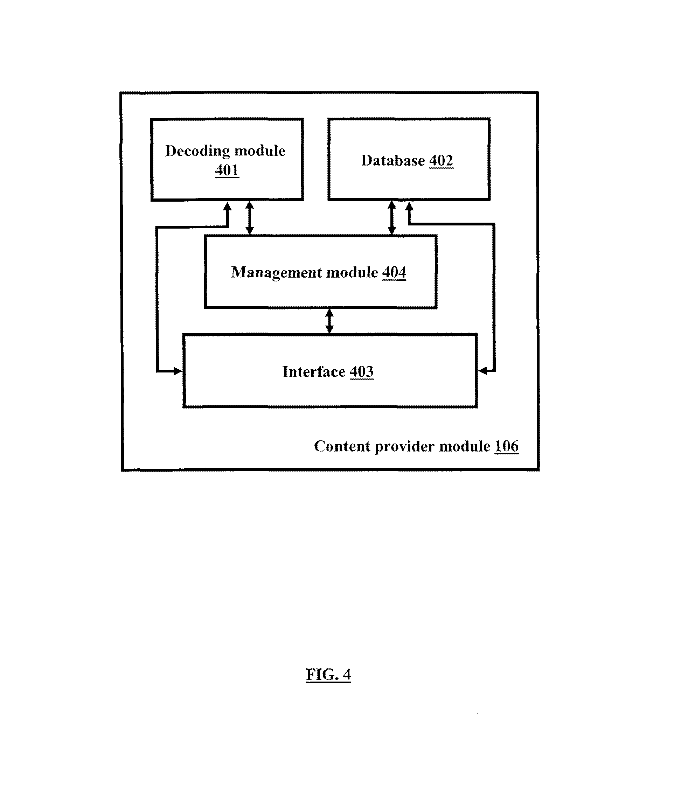

FIG. 4 depicts a content provider module, according to an embodiment as disclosed herein. The content provider module 106 is responsible for removing the super-imposed content requested by the users for removal from the respective channel. The content provider module 106 comprises of different sub-modules that include a decoding module 401, a database 402, a management module 404 and an interface 403. The content provider module 106 may also include various other modules in addition to the modules depicted in the embodiment herein.

The decoding module 401 is configured for receiving requests from the user 101 and decoding the request to identify the user (user port ID) who sent the request. The decoding module 401 may also map the user 101 request to the channel ID or multicast group address for which the user 101 may want to remove the content. On receiving the request for removal of the super-imposed content from the BSR 105 or the DSLAM 103 the decoding module 401 identifies the channel and removes the super-imposed content from the respective channel. Further, the decoding module 401 may stream the channel to the user without the super-imposed content. The decoding module 401 may also intimate the content provider module 106 to inform the charging functions for charging the user for the service.

The database 402 is configured for storing information of every user 101. The database 402 may store details as to which user has requested for removal of super-imposed content from which channel. In an example, say user 101a has requested for removal of superimposed image ads from ESPN, another user 101b has requested for removal of superimposed text messages displayed on a music channel, the requests and details of the user may be stored separately on the database 402.

The interface 403 acts as a means for interaction of the content provider module 106 with external network components such as DSLAM 103 switch 104, BSR 105 and the like. All requests and responses are routed through the interface 403 to various other components. The requests may be requests for removal of the content from the selected channel or the like.

The management module 404 is responsible for the functioning of the content provider module 106. All modules of the content provider module 106 function under the control of the management module 404. The management module 404 may issue different control signals for removal of the super-imposed content from the channel, for sending responses to the user 101 or for streaming the channels after removal of the super-imposed content from the channels. The management module 404 is also responsible for routing request to appropriate modules that address the request within the content provider module 106.

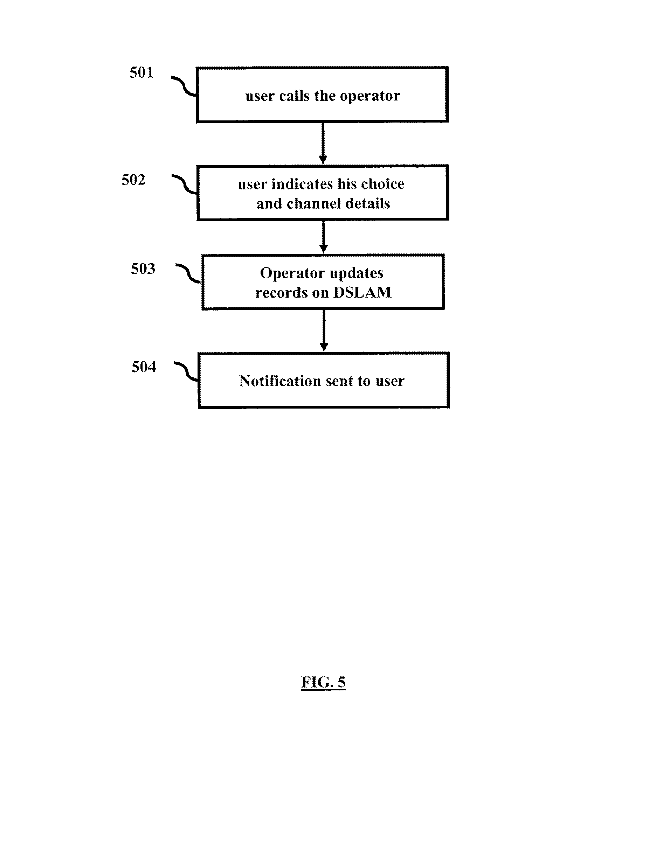

FIG. 5 is a flow chart depicting the process of registration, according to an embodiment as disclosed herein. A user 101a, 101b who is interested in using the service to block super-imposed content from a channel may register for the service by calling customer care of his own network operator who provides this service by paying the requested fees for this new service. In advanced systems, the request may be sent (501) in the form of Internet Group Management protocol request message to the network operator. The user 101a, 101b may also specify (502) the channel for which the service is requested. On receiving the request, the network operator may identify the channel ID for which the request is made by the user 101 a, 101b. In an embodiment, say the user 101a is watching a movie on HBO, with a channel id of 230.1.1.1, and wishes to eliminate the sub-titles being displayed on the channel. The user 101a may place a request to remove the sub-titles. The network operator on receiving the request for removing the super-imposed content may identify the channel for which the content is to be removed. Further, the operator may update (503) the details of the user 101a in his profile details stored on the DSLAM 103. For example, the user 101 a profile may be updated as user 101 a (user port id say 1/1/4/20) is registered for the super-imposed content blocking service for channel 230.1.1.1. On updating, the user is informed by network operator though voice call to the user or in advanced system a notification may be sent (504) to the user 101 a informing him that he is successfully registered for the service. The various actions in method 500 may be performed in the order presented, in a different order or simultaneously. Further, in some embodiments, some actions listed in FIG. 5 may be omitted.

In an embodiment, the user 101 may at any time choose to unsubscribe for the service by sending a request to opt out of the service to the network operator. Further, the user 101 may also choose to use the service for the duration of only one movie or the like. The user 101 may be charged for the service by the network operator accordingly. The charges may be on the usage basis or a fixed package may be offered to the user 101 with some discount schemes.

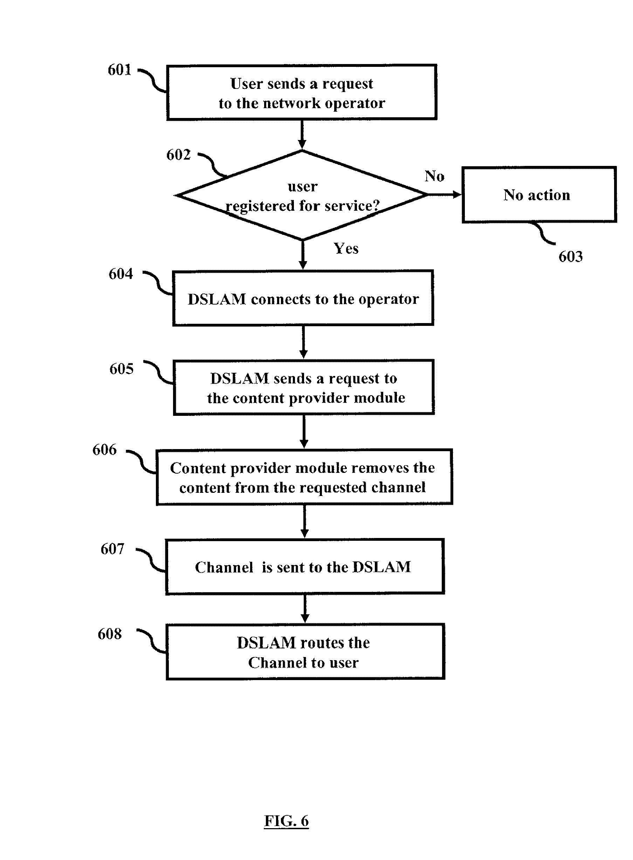

FIG. 6 is a flow chart depicting the process of blocking content in IP TV service, according to an embodiment as disclosed herein. A user 101a, who is registered for the service to remove super-imposed content from a channel may send (601) a request to the network operator for removing the super-imposed content from a selected channel. In an example, say user 101a would like to remove the superimposed ads that are displayed on ESPN original channel image. The request may be sent in the form of IGMP join request for the channel. The request may be sent using IGMP forking method. The request is sent to the DSLAM 103 through the routing gateway (RG) 102. The DSLAM 103 on receiving the request checks (602) with the profile details of the user 101 a to check if the user 101 a is registered for the service. If the user 101a is not registered for the service, no action is performed (603). In an embodiment, the user may be sent a message that he needs to register for the service to block the desired super-imposed content. On the other hand, if the user 101a is registered for the service, the DSLAM 103 connects (604) to the network operator. The DSLAM 103 connects to the operator in order to identify the user who has requested for the service and the channel id for which the request is received. In this stage, user 101a with user port id for example 1/1/5/40 and the channel id for ESPN for example 540.1.1.1 is identified. On obtaining this information, the DSLAM 103 sends (605) the request to the content provider module 106 to service the request. The content provider module 106 on receiving the request decodes the request using the decoder and identifies the channel (540.1.1.1) and the user (1/1/5/40). Further, the content provider module 106 removes (606) the sub-titles from the requested channel. In the actual process, when any super-imposed content is to be sent through a channel for display the content provider module 106 superimposes the content on that particular channel content for which the super-imposed content is displayed. When the content provider module 106 receives a request for the removal of the super-imposed content, then the content provider module 106 may not superimpose the content for that user 101 a for the channel selected by him. Thus, the user 101a receives the channel without the super-imposed content. The channel is then streamed (607) to the DSLAM 103 without the super-imposed content. Further, the DSLAM 103 routes (608) the channel to the user 101a without the super-imposed content. The various actions in method 600 may be performed in the order presented, in a different order or simultaneously. Further, in some embodiments, some actions listed in FIG. 6 may be omitted.

In an embodiment, all the functions of the DSLAM 103 may be performed by the BSR 105. The functions such as storing the details of the user 101 registration, checking if the user 101 is registered for the service on receiving a request from the user 101 for the service, routing requests to the content provider module 106 and informing the content provider module 106 for removal of the super-imposed content requested by the user 101 may also be performed by the BSR 105.

The embodiments disclosed herein can be implemented through at least one software program running on at least one hardware device and performing network management functions to control the network elements. The network elements shown in Fig. 1, 2, 3 and 4 include blocks which can be at least one of a hardware device, or a combination of hardware device and software module.

The embodiment disclosed herein specifies a system for filtering content from a channel requested by the user. The mechanism allows a user to make a request for removing content from a channel providing a system thereof. Therefore, it is understood that the scope of the protection is extended to such a program and in addition to a computer readable means having a message therein, such computer readable storage means contain program code means for implementation of one or more steps of the method, when the program runs on a server or mobile device or any suitable programmable device. The device may also include means which could be e.g. hardware means like e.g. an ASIC, or a combination of hardware and software means, e.g. an ASIC and an FPGA, or at least one microprocessor and at least one memory with software modules located therein. Thus, the means are at least one hardware means and/or at least one software means. The method embodiments described herein could be implemented in pure hardware or partly in hardware and partly in software. The device may also include only software means. Alternatively, the invention may be implemented on different hardware devices, e.g. using a plurality of CPUs.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the claims as described herein.

## Claims

1. A network module in a Internet Protocol television environment for blocking super-imposed content in a channel, said module configured with at least one means adapted for
receiving a request for removing said super-imposed content from said channel from a user (101);
routing said request to a content provider module (106) for removal of said super-imposed content for said channel;
receiving said channel content without said super-imposed content from said content provider module (106); and
sending said channel content without said super-imposed content to a device of said user (101).

2. The network module as in claim 1, wherein said module is configured with means further adapted for registering said user (101) for said service and storing information of said user with a network operator.

3. The network module as in claim 1, wherein said module is configured with means further adapted for checking if said user is registered for said service before routing said request to said content provider module (106).

4. The network module as in claim 1, wherein said module is configured with means adapted for blocking said super-imposed content, where said super-imposed content is at least one of sub-titles, images, messages, text, advertisements or combination of the same.

5. A content provider module (106) in a internet protocol television environment, for blocking super-imposed content in a channel, said provider is configured with at least one means adapted for
receiving a request from a network module for blocking said super-imposed content from said channel content;
decoding said request to identify said channel from which said super-imposed content is to be blocked; and
removing said superimposed content from said channel content by not overlaying said channel content with said super-imposed content; and
routing said channel content without said super-imposed content to said network module.

6. The content provider module (106) as in claim 5, wherein said module is configured with means adapted for receiving said request from said network module wherein said network module is a digital subscriber line access module (103).

7. The content provider module (106) as in claim 5, wherein said module is configured with means adapted for receiving said request from said network module wherein said network module is a broadband service router (105).

8. The content provider module (106) as in claim 5, wherein said module is configured with means adapted for removing said super-imposed content from said channel, wherein said super-imposed content is at least one of sub-titles, images, messages, text, advertisements or a combination of the same.

9. The content provider module (106) as in claim 5, wherein said module is configured with means adapted for decoding said request by using a decoder (401) that is configured for identifying said channel from which said super-imposed content is to be removed.

10. A method for blocking super-imposed content in a channel in a internet protocol television environment, said environment comprising a network module, a routing gateway (102), a switch (104), plurality of users (101a, 101b), a content provider module (106) further said method comprising
receiving by said network module a request for removing said super-imposed content for said channel from said user (101);
routing by said network module said request to a content provider module (106) for removal of said super-imposed content for said channel;
identifying by said content provider module (106) said channel from which said super-imposed content is to be removed;
removing by said content provider module (106) said content from said channel by not overlaying said super-imposed content on said channel content;
sending by said content provider module (106) said channel content to said network module without said super-imposed content; and
sending by said network module said channel content without said super-imposed content to a device of said user.

11. The method as in claim 14, wherein said method further registers said user for said service and stores said user's information with a network operator.

12. The method as in claim 10, wherein said method is further provided with means to check if said user is registered for said service before routing said request to said content provider module (106).

13. The method as in claim 10, wherein said method is provided with means to block said super-imposed content, where said content is at least one of sub-titles, images, messages, text, advertisements or combination of the same.

14. The method as in claim 10, wherein said network module is a digital subscriber line access module (103, 105).

15. The method as in claim 10, wherein said network module is a broadband service router (106).

## Amended claims

### Amended claims in accordance with Rule 137(2) EPC.

**1.** (Currently Amended) A network module in a Internet Protocol television environment for blocking super-imposed content in a channel, said module configured with at least one means adapted for
receiving a request for removing said super-imposed content from said channel from a user (101);
routing said request to a content provider module (106) for removal of said super-imposed content for said channel;
receiving said channel without said super-imposed content from said content provider module (106); and
sending said channel without said super-imposed content to a device of said user (101).

**2.** (Currently Amended) The network module as in claim 1, wherein said module is configured with means further adapted for registering said user (101) for a service and storing information of said user with a network operator.

**3.** (Currently Amended) The network module as in claim 1, wherein said module is configured with means further adapted for checking if said user is registered for a service before routing said request to said content provider module (106).

**4.** (Original) The network module as in claim 1, wherein said module is configured with means adapted for blocking said super-imposed content, where said super-imposed content is at least one of sub-titles, images, messages, text, advertisements or combination of the same.

**5.** (Currently Amended) A content provider module (106) in a internet protocol television environment, for blocking super-imposed content in a channel, said provider is configured with at least one means adapted for
receiving a request from a network module for blocking said super-imposed content from said channel;
decoding said request to identify said channel from which said super-imposed content is to be blocked; and
removing said superimposed content from said channel by not overlaying a channel content with said super-imposed content; and
routing said channel without said super-imposed content to said network module.

**6.** (Original) The content provider module (106) as in claim 5, wherein said module is configured with means adapted for receiving said request from said network module wherein said network module is a digital subscriber line access module (103).

**7.** (Original) The content provider module (106) as in claim 5, wherein said module is configured with means adapted for receiving said request from said network module wherein said network module is a broadband service router (105).

**8.** (Original) The content provider module (106) as in claim 5, wherein said module is configured with means adapted for removing said super-imposed content from said channel, wherein said super-imposed content is at least one of sub-titles, images, messages, text, advertisements or a combination of the same.

**9.** (Original) The content provider module (106) as in claim 5, wherein said module is configured with means adapted for decoding said request by using a decoder (401) that is configured for identifying said channel from which said super-imposed content is to be removed.

**10.** (Currently Amended) A method for blocking super-imposed content in a channel in a internet protocol television environment, said environment comprising a network module, a routing gateway (102), a switch (104), plurality of users (101a, 101b), a content provider module (106) further said method comprising
receiving by said network module a request for removing said super-imposed content for said channel from said user (101);
routing by said network module said request to a content provider module (106) for removal of said super-imposed content for said channel;
identifying by said content provider module (106) said channel from which said super-imposed content is to be removed;
removing by said content provider module (106) said content from said channel by not overlaying said super-imposed content on said channel;
sending by said content provider module (106) said channel to said network module without said super-imposed content; and
sending by said network module said channel without said super-imposed content to a device of said user.

**11.** (Currently Amended) The method as in claim 104, wherein said method further registers said user for a said service and stores said user's information with a network operator.

**12.** (Currently Amended) The method as in claim 10, wherein said method is further provided with means to check if said user is registered for a service before routing said request to said content provider module (106).

**13.** (Original) The method as in claim 10, wherein said method is provided with means to block said super-imposed content, where said content is at least one of sub-titles, images, messages, text, advertisements or combination of the same.

**14.** (Original) The method as in claim 10, wherein said network module is a digital subscriber line access module (103, 105).

**15.** (Original) The method as in claim 10, wherein said network module is a broadband service router (106).
